# EUROPEAN PATENT SPECIFICATION

(11) **EP 3 776 766 B1**
(45) Date of publication and mention of the grant of the patent: **15.02.2023**
(21) Application number: 18716991.7
(22) Date of filing: 04.04.2018
(51) Int. Cl.: H02B 1/36

(54) **REMOVABLE MODULE**
EINSCHUBMODUL
MODULE AMOVIBLE

(43) Date of publication of application: 17.02.2021
(73) Proprietor: ABB Schweiz AG, 5400 Baden (CH)
(72) Inventor: SCHMITT, Hans-Jürgen, 69493 Hirschberg (DE)
(74) Representative: Wesch, Arno
(86) International application number: PCT/EP2018/058618
(87) International publication number: WO 2019/192688

(56) References cited:
- DE-U1- 29 909 433
- FR-A5- 2 082 369
- US-A- 3 470 422

## Description

The invention relates to a module for insertion into a housing or for removal from a housing according to the preamble of claim 1.

Modules of this kind are disclosed in US 3 470 422 A, DE 299 09 433 U1 and FR 2 082 369 A5

Modules are known from the prior art which can be inserted into switchgear cabinets and can be removed from these again. Such modules can be inserted into a switchgear cabinet in the manner of a drawer and removed from this again. Modules of this type can carry electrical equipment, accommodate electrical equipment or be configured as such.

In practice there is a need for modules which can be inserted easily and also removed again, and which are stable in use so that they suffer as little damage as possible.

It is therefore the object of the invention to provide a module which can be inserted slidingly into a housing as far as possible in an unimpeded manner and which can be removed again from this.

According to the invention, the preceding object is solved by a module having the features of patent claim 1. According to this, parallel elongate strip parts extend between the front wall and the rear wall, the longitudinal extension whereof spaces apart the front wall and the rear wall, wherein at least one strip part has a guide leg for cooperation with a guide counter-element.

According to the invention, it has firstly been identified that a strip part can have a carrying function and a guide function. It has then been identified that a strip part substantially increases the torsional stability of a module during its movement. By this means, electrical devices such as, for example, contacts, switches or control units can be effectively protected. Finally it has been identified that a strip part can cooperate with a guide counter-element in a housing or switchgear cabinet in such a manner that the module is securely guided during insertion and removal. The guide counter-element can, for example, be a rail or a similar guide device which extends in the insertion direction or removal direction.

Advantageously the guide leg projects freely outwards with an outer edge or additionally the strip part has only one guide leg. This allows a particularly defined guidance of the module. A strip-like guide leg increases the bending stiffness of the strip part. A freely projecting guide leg additionally creates space for assembly elements such as screws.

Further advantageously the strip part has three legs, wherein the guide leg and two further mounting legs are each inclined with respect to one another and have a protruding outer edge. As a result the strip part has a type of star shape. The ray-like protruding mounting legs do not interfere with the guide leg when screws are fastened onto these.

Against this background, advantageously at least one mounting leg has at least one screw hole or a plurality of screw holes. As a result of a grid-like or pattern-like arrangement of screw holes on the strip parts, equipment can be fastened in the module in manifold ways. An adjustable mechanical coding of the modules is also made possible as a result.

Advantageously the guide leg has at least one recess. A recess or a plurality of recesses can constitute a mechanical coding so that a module can only be brought to a specific location in a housing or switchgear cabinet.

The strip part is configured to be Y-shaped in cross-section. Preferably all the strip parts are configured to be Y-shaped. This shape makes it possible to accommodate screws without the screw heads being able to impede the sliding function of the module. The Y shape brings about a high torsional stability and bending strength of the strip parts and/or the entire module.

Advantageously four strip parts are provided. The removable and movable module is designed so that four strip parts running depthwise, namely in the insertion direction, take over the mechanical connection of a front and a rear wall and also the guidance of the module in two directions. In this respect, a strip part is a carrying part and a guide part.

Further advantageously the front wall and the rear wall are interconnected by means of at least one strip part or by all the strip parts. The strip parts allow a good access to equipment which is accommodated inside the module.

Advantageously at least one strip part can be connected or is connected positively to the front wall and/or rear wall. The positive connection simplifies the assembly of the module. The preferably four Y-shaped strip parts are connected positively to the front and the rear wall and secured by riveting, screwing, latching or welding.

Further advantageously an arrangement comprises a module of the type described here and a housing, wherein the module can be moved in the insertion direction or removal direction and wherein the insertion direction and the removal direction is oriented parallel to at least one strip part. Thus, the module can be used in switching devices or switchgear cabinets. Uses in the low-voltage area are feasible.

The module and/or the arrangement can be used in a low-voltage switching installation, in particular a low voltage switchgear.

An IP43 type of protection can be achieved by using sealing strips. The size of the module is determined by the dimensions of the front wall and the rear wall.

In the drawings
- Fig. 1: shows a perspective view of a module which has a front wall and a rear wall, wherein the front wall and the rear wall are interconnected by four strip parts,
- Fig. 2: shows a perspective detailed view of a strip part which is configured to be Y-shaped and
- Fig. 3: shows a merely schematic diagram as to how a strip part of a module co operates with a guide counter-element of a housing, in particular switch gear cabinet during insertion or removal.

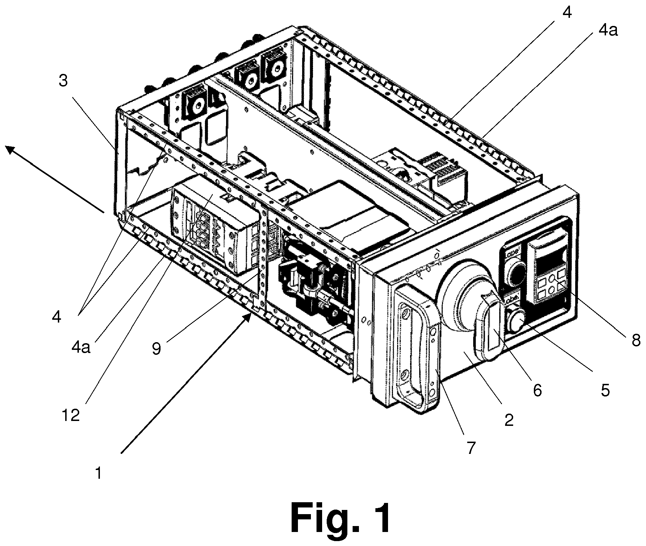

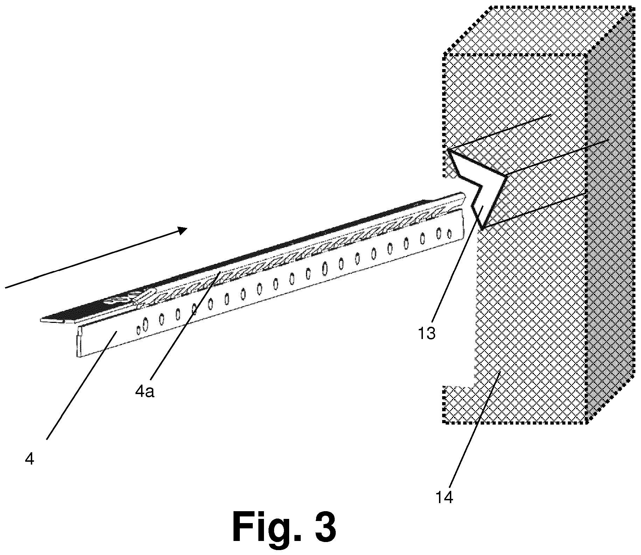

Figure 1 shows a module for insertion into a housing 14 or for removal from a housing 14 comprising a base body 1 having a front wall 2 and a rear wall 3. Parallel elongate strip parts 4 extend between the front wall 2 and the rear wall 3, the longitudinal extension whereof spaces apart the front wall 2 and the rear wall 3, wherein at least one strip part 4 has a guide leg 4a for cooperation with a guide counter-element 13 shown in Fig. 3.

The guide leg 4a projects freely outwards with an outer edge. The strip part 4 has only one guide leg 4a. Specifically four strip parts 4 are provided, wherein each strip part 4 has only one guide leg 4a.

The front wall 2 and the rear wall 3 are interconnected by all the strip parts 4. Each strip part 4 is positively connected to the front wall 2 and the rear wall 3. The front wall 2 and the rear wall 3 are made of metal in a contact-safe manner. The front wall 2 consists of two elements, wherein an inner element primarily takes over fastening functions and an outer element principally functions as an optical screen. Actuating devices for switching elements 5 and for a locking system 6 are arranged in the front wall 2. The actuating devices can be configured as two separate actuating devices or be combined in one device. A handle element 7 is furthermore fastened to the front wall 2.

In addition to a primary structure, a separately removable control unit is also located in the module. The operating and display panel 8 of the control unit is also located in the front wall 2 and therefore is easily accessible. The rear wall 3 is provided for fastening primary contacts, namely input and output, and control contacts.

At least one electrical device 12 is accommodated inside the module. As a result of the skeleton structure of the module which is created by the strip parts 4, electrical equipment inside the module is readily accessible.

Two strip parts 4 are interconnected by a transverse strut 9. The transverse strut 9 is oriented substantially orthogonally to the strip parts 4 but can also have a different inclination relative to the strip parts 4. The transverse strut 9 prevents sagging of long strip parts 4.

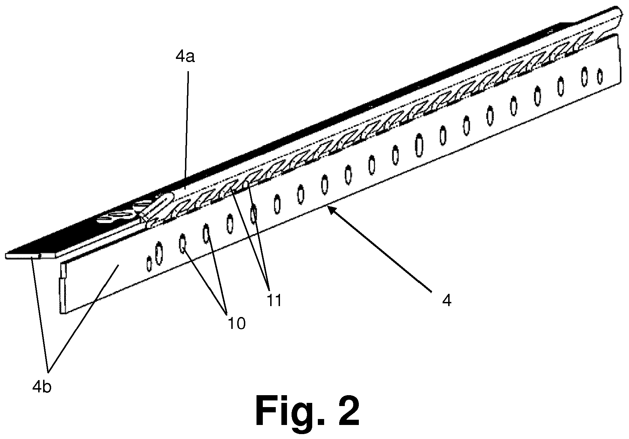

Figure 2 shows in a perspective view a strip part 4 as installed in the module according to Fig. 1.

The strip part 4 has three legs, wherein the guide leg 4a and two further mounting legs 4b are each inclined with respect to one another and each have a freely projecting outer edge.

The outer edge of the guide leg 4a is rounded. The guide leg 4a is formed by folding.

Each mounting leg 4b has a plurality of screw holes 10. The guide leg 4a has a plurality of recesses 11. The strip part 4 is configured to be Y-shaped in cross-section.

Figure 3 shows schematically an arrangement comprising a module not shown completely having a strip part 4 of the type described here and a housing 14 configured as a switchgear cabinet, wherein the module can be moved in the insertion direction or removal direction and wherein the insertion direction and the removal direction is oriented parallel to at least one strip part 4. The insertion direction is shown by the arrow in Fig. 3 and Fig. 1.

The guide counter-element 13 is configured in the manner of a rail with which the guide leg 4a can cooperate.

The housing 14 is not restricted to a configuration as a switchgear cabinet but can be configured as any container or shelf in which modules can be inserted.

The module according to Fig. 1 is configured in this respect as a push-in module and configured in the manner of a drawer. The module is configured as a so-called skeleton module.

The module certainly has a front wall 2 and a rear wall 3 but no side walls. A base plate can preferably be provided but can also be omitted if the equipment is suitably fastened to the front wall 2, the rear wall 3 and/or to the strip parts 4.

**Reference List**

| | |
|---|---|
| 1 | Base body |
| 2 | Front wall |
| 3 | Rear wall |
| 4 | Strip part |
| 4a | Guide leg |
| 4b | Mounting leg |
| 5 | Actuating device for switching elements |
| 6 | Actuating device for locking system |
| 7 | Handle element |
| 8 | Operating and display panel |
| 9 | Transverse strut |
| 10 | Screw hole |
| 11 | Recess |
| 12 | Electrical device |
| 13 | Guide counter-element of 14 |
| 14 | Housing |

## Claims

1. A module for insertion into a housing (14) or for removal from a housing (14) comprising a base body (1) having a front wall (2) and a rear wall (3), wherein parallel elongate strip parts (4) extend between the front wall (2) and the rear wall (3), the longitudinal extension or dimension thereof spaces apart the front wall (2) and the rear wall (3), wherein at least one strip part (4) has a guide leg (4a) for cooperation with a guide counter-element (13) of the housing (14), **characterized in that** the at least one strip part (4) is configured to be Y-shaped in cross-section.

2. The module according to claim 1, **characterized in that** the guide leg (4a) projects freely outwards with an outer edge and/or that the at least one strip part (4) has only one guide leg (4a).

3. The module according to claim 1 or 2, **characterized in that** the at least one strip part (4) has three legs, wherein the guide leg (4a) and two further mounting legs (4b) are each inclined with respect to one another and have a protruding outer edge.

4. The module according to claim 3, **characterized in that** at least one mounting leg (4b) has at least one screw hole (10) or a plurality of screw holes (10).

5. The module according to any one of the preceding claims, **characterized in that** the guide leg (4a) has at least one recess (11).

6. The module according to any one of the preceding claims, **characterized in that** four strip parts (4) are provided.

7. The module according to any one of the preceding claims, **characterized in that** the front wall (2) and the rear wall (3) are interconnected by means of the at least one strip part (4) or by all the strip parts (4).

8. The module according to any one of the preceding claims, **characterized in that** the at least one strip part (4) can be connected or is connected positively tc the front wall (2) and/or rear wall (3).

9. The arrangement comprising a module according to one of the preceding claims and a housing (14), wherein the module can be moved in the insertion direction or removal direction and wherein the insertion direction and the removal direction is oriented parallel to at least one strip part (4).

## Patentansprüche

1. Modul zum Einführen in ein Gehäuse (14) oder zum Herausnehmen aus einem Gehäuse (14), umfassend einen Grundkörper (1) mit einer Vorderwand (2) und einer Rückwand (3), wobei sich parallele Längsleistenteile (4) zwischen der Vorderwand (2) und der Rückwand (3) erstrecken, wobei deren Längserstreckung oder Abmessung die Vorderwand (2) und die Rückwand (3) beabstandet, wobei mindestens ein Leistenteil (4) einen Führungsschenkel (4a) zum Zusammenwirken mit einem Führungsgegenelement (13) des Gehäuses (14) hat,
**dadurch gekennzeichnet, dass** der mindestens eine Leistenteil (4) im Querschnitt Y-förmig ausgestaltet ist.

2. Modul nach Anspruch 1, **dadurch gekennzeichnet, dass** der Führungsschenkel (4a) mit einem Außenrand frei nach außen vorragt und/oder dass der mindestens eine Leistenteil (4) nur einen Führungsschenkel (4a) hat.

3. Modul nach Anspruch 1 oder 2, **dadurch gekennzeichnet, dass** der mindestens eine Leistenteil (4) drei Schenkel hat, wobei der Führungsschenkel (4a) und zwei weitere Montageschenkel (4b) jeweils bezüglich einander geneigt sind und einen vorragenden Außenrand haben.

4. Modul nach Anspruch 3, **dadurch gekennzeichnet, dass** mindestens ein Montageschenkel (4b) mindestens ein Schraubenloch (10) oder eine Vielzahl von Schraubenlöchern (10) hat.

5. Modul nach einem der vorhergehenden Ansprüche **dadurch gekennzeichnet, dass** der Führungsschenkel (4a) mindestens eine Ausnehmung (11) hat.

6. Modul nach einem der vorhergehenden Ansprüche, **dadurch gekennzeichnet, dass** vier Leistenteile (4) vorgesehen sind.

7. Modul nach einem der vorhergehenden Ansprüche, **dadurch gekennzeichnet, dass** die Vorderwand (2) und die Rückwand (3) mittels des mindestens einen Leistenteils (4) oder mittels aller Leistenteile (4) miteinander verbunden sind.

8. Modul nach einem der vorhergehenden Ansprüche, **dadurch gekennzeichnet, dass** der mindestens eine Leistenteil (4) positiv mit der Vorderwand (2) und/oder Rückwand (3) verbunden werden kann oder verbunden ist.

9. Anordnung, umfassend ein Modul nach einem der vorhergehenden Ansprüche und ein Gehäuse (14), wobei das Modul in der Einführrichtung oder der Herausnahmerichtung bewegt werden kann und wobei die Einführrichtung und die Herausnahmerichtung parallel zu mindestens einem Leistenteil (4) ausgerichtet sind.

## Revendications

1. Module destiné à être inséré dans un logement (14) ou extrait d'un logement (14) comprenant un corps de base (1) comportant une paroi avant (2) et une paroi arrière (3), des parties formant barrettes (4) allongées parallèles s'étendant entre la paroi avant (2) et la paroi arrière (3), l'étendue ou la dimension longitudinale de celles-ci espaçant la paroi avant (2) et la paroi arrière (3) l'une de l'autre, au moins une partie formant barrette (4) comportant une patte de guidage (4a) destinée à coopérer avec un élément conjugué de guidage (13) du logement (14),
**caractérisé en ce que** l'au moins une partie formant barrette (4) est conçue de façon à présenter une section transversale en forme de Y.

2. Module selon la revendication 1, **caractérisé en ce que** la patte de guidage (4a) fait saillie librement vers l'extérieur avec un bord extérieur et/ou **en ce que** l'au moins une partie formant barrette (4) comporte une seule patte de guidage (4a).

3. Module selon la revendication 1 ou 2, **caractérisé en ce que** l'au moins une partie formant barrette (4) comporte trois pattes, la patte de guidage (4a) et deux autres pattes de fixation (4b) étant chacune inclinées les unes par rapport aux autres et comportant un bord extérieur saillant.

4. Module selon la revendication 3, **caractérisé en ce qu'**au moins une patte de fixation (4b) comporte au moins un trou pour vis (10) ou une pluralité de trous pour vis (10) .

5. Module selon l'une quelconque des revendications précédentes, **caractérisé en ce que** la patte de guidage (4a) comporte au moins un évidement (11).

6. Module selon l'une quelconque des revendications précédentes, **caractérisé en ce qu'**il comprend quatre parties formant barrettes (4).

7. Module selon l'une quelconque des revendications précédentes, **caractérisé en ce que** la paroi avant (2) et la paroi arrière (3) sont raccordées entre elles par le biais de l'au moins une partie formant barrette (4) ou par le biais de toutes les parties formant barrettes (4).

8. Module selon l'une quelconque des revendications précédentes, **caractérisé en ce que** l'au moins une partie formant barrette (4) peut être ou est raccordée par concordance de forme avec la paroi avant (2) et/ou la paroi arrière (3).

9. Structure comprenant un module selon l'une des revendications précédentes et un logement (14), le module pouvant être déplacé dans la direction d'insertion ou la direction d'extraction et la direction d'insertion et la direction d'extraction étant orientées parallèlement à l'au moins une partie formant barrette (4).
